# EUROPEAN PATENT SPECIFICATION

(11) **EP 4 113 870 B1**
(45) Date of publication and mention of the grant of the patent: **25.06.2025**
(21) Application number: 21779199.5
(22) Date of filing: 26.03.2021
(51) Int. Cl.: H04B 17/382, H04L 1/1829, H04L 5/00, H04L 27/00

(54) **COMMUNICATION METHODS, RELATED APPARATUS, COMPUTER-READABLE STORAGE MEDIUM, AND COMPUTER PROGRAM PRODUCT**
KOMMUNIKATIONSVERFAHREN, ZUGEHÖRIGE VORRICHTUNG, COMPUTER-LESBARES SPEICHERMEDIUM UND COMPUTERPROGRAMMPRODUKT
PROCÉDÉS DE COMMUNICATION, APPAREIL ASSOCIÉ, SUPPORT D'ENREGISTREMENT LISIBLE PAR ORDINATEUR ET PRODUIT DE PROGRAMME INFORMATIQUE

(30) Priority: 28.03.2020 CN 202010233004
(43) Date of publication of application: 04.01.2023
(73) Proprietor: Huawei Technologies Co., Ltd., Shenzhen, Guangdong 518129 (CN)
(72) Inventor: YOU, Chunhua, Shenzhen, Guangdong 518129 (CN); ZHAO, Li, Shenzhen, Guangdong 518129 (CN)
(74) Representative: Pfenning, Meinig & Partner mbB
(86) International application number: PCT/CN2021/083298
(87) International publication number: WO 2021/197228

(56) References cited:
- CN-A- 110 475 265
- CN-A- 110 932 829
- US-A1- 2019 053 269
- US-A1- 2020 037 354
- HUAWEI ET AL: "Coexistence and channel access for NR unlicensed band operations", vol. RAN WG1, no. Prague, Czech Republic; 20190826 - 20190830, 17 August 2019 (2019-08-17), XP051764729, Retrieved from the Internet <URL:http://www.3gpp.org/ftp/tsg_ran/WG1_RL1/TSGR1_98/Docs/R1-1908109.zip> [retrieved on 20190817]
- "3rd Generation Partnership Project; Technical Specification Group Radio Access Network; Study on NR-based access to unlicensed spectrum (Release 16)", 27 December 2018 (2018-12-27), XP051575597, Retrieved from the Internet <URL:http://www.3gpp.org/ftp/tsg%5Fran/WG1%5FRL1/DRAFT/Clean%5Fversions/38889%2Dg00%2Ezip> [retrieved on 20181227]
- SAMSUNNG: "DL signals and channels for NR-U", 3GPP DRAFT; R1-1912447, vol. RAN WG1, 8 November 2019 (2019-11-08), Reno, USA, pages 1 - 6, XP051820037

## Description

### TECHNICAL FIELD

This application relates to the field of communication technologies, and in particular, to communications methods and a related apparatus, a computer-readable storage medium and a computer program product.

### BACKGROUND

Because an unlicensed spectrum is a shared spectrum resource, there are many different air interface technologies in the unlicensed spectrum. Therefore, to ensure coexistence of different air interface technologies in the unlicensed spectrum, a listen before talk (listen before talk, LBT) channel contention access mechanism is used to avoid mutual interference between the different air interface technologies. Because availability of a channel on the unlicensed spectrum cannot be ensured at any time, before data transmission, LBT requires to first monitor the channel, perform clear channel assessment (clear channel assessment, CCA), and then transmit data when ensuring that the channel is idle. CCA refers to determining, by detecting a signal strength on an unlicensed spectrum resource, whether the channel is idle.

Currently, LBT can be classified into omnidirectional-based LBT and direction-based LBT. The omnidirectional-based LBT means that a device receives signals in all directions, and then measures the signals to obtain signal strengths. If the signal strength is greater than a preset threshold, it indicates that a channel is idle. Alternatively, if the signal strength is less than or equal to a preset threshold, it indicates that a channel is busy. The direction-based LBT means that a device receives signals only in some directions, and then measures the signals in the some directions to obtain signal strengths in the some directions. If the signal strength in the some directions is greater than a preset threshold, it indicates that a channel is idle in the some directions. Alternatively, if the signal strength in the some directions is less than or equal to a preset threshold, it indicates that a channel is busy in the some directions. When the channel is idle, the device may obtain a channel occupancy time (channel occupancy time, COT) of the channel, and may indicate the COT in a broadcast form, so that another device does not perform channel access on the channel within the COT after receiving an indication. However, currently, an indication of the channel occupancy time is applicable only to the omnidirectional-based LBT, and is not applicable to the direction-based LBT.

US 2020/037354 A1 discloses a method for operating a UE in a wireless communication system. The method includes: identifying a channel access mechanism to gain access to an operating channel of unlicensed band; performing a LBT operation over the operating channel according to the identified channel access mechanism and obtaining a COT for transmission and reception on the operating channel after the LBT operation is successful; identifying, within the COT, one or more than one switching points for the UE to switch from UL transmission to DL reception or from the DL reception to the UL transmission; and switching from the UL transmission to the DL reception or from the DL reception to the UL transmission based on the identified one or more switching points.

### SUMMARY

The invention is set out in the appended set of claims. Embodiments of this application provide communication methods, a related apparatus, a computer-readable storage medium and a computer program product, to provide direction-based channel occupancy indication information. When the indication information indicates that a channel is occupied, downlink measurement is not performed, and when the indication information indicates that the channel is not occupied, downlink measurement is performed. Therefore, unnecessary measurement can be reduced, a downlink measurement failure caused because a network side does not preempt the channel can be excluded, and measurement efficiency and accuracy of a measurement result can be improved.

The following describes this application from different aspects, not necessarily claimed. It should be understood that mutual reference may be made to the following implementations and beneficial effects of the different aspects.

According to a first aspect, an embodiment of this application provides a communication method. The method is applicable to a terminal device, and the method includes: The terminal device receives first indication information sent by a network device. The first indication information indicates channel occupancy information of the network device, and the channel occupancy information includes a channel occupancy time and/or a channel unoccupied time. When the first indication information indicates the channel occupancy time of the network device, if the network device configures a corresponding downlink resource (for example, a downlink transmit beam or a serving cell) for the terminal device, the terminal device performs downlink measurement and/or receives downlink data within the channel occupancy time. When the first indication information indicates the channel unoccupied time of the network device, within the channel unoccupied time, the terminal device skips performing downlink measurement, skips receiving the downlink data, skips sending a HARQ feedback corresponding to the downlink data, or determines that a downlink measurement result is invalid.

Optionally, the first indication information may include at least one beam identity and channel occupancy information corresponding to each of the at least one beam identity. The beam identity included in the first indication information may be used to notify the terminal device of a beam for which the channel occupancy information of the network device is specific. The channel occupancy information corresponding to the beam identity included in the first indication information may be used to notify the terminal device of an LBT result of the network device. The channel occupancy time may include a channel occupancy start time and channel occupancy duration. The channel unoccupied time may include unoccupied duration of the channel.

Optionally, the first indication information may alternatively include a cell identity and the channel occupancy information.

In this embodiment of this application, only when a network side preempts a channel and the network side configures the corresponding downlink resource for the terminal device, the terminal device performs downlink measurement and/or receives the downlink data within the channel occupancy time indicated by the first indication information. When the network side does not preempt the channel, even if the network side configures the corresponding downlink resource for the terminal device, within the channel unoccupied time indicated by the first indication information, the terminal device does not need to perform downlink measurement, does not receive the downlink data, does not send the HARQ feedback corresponding to the downlink data, or determines that the downlink measurement result is invalid. Therefore, unnecessary measurement is reduced, a downlink measurement failure caused because the network side does not preempt the channel is excluded, and measurement efficiency and accuracy of a measurement result are improved.

With reference to the first aspect, in a possible implementation, the first indication information includes the at least one beam identity and a channel occupancy time corresponding to each of the at least one beam identity. That the terminal device performs downlink measurement and/or receives downlink data within the channel occupancy time includes: If the beam identity included in the first indication information includes a beam identity of a first beam included in the downlink resource configured by the network device for the terminal device, the terminal device performs downlink measurement on the first beam, and/or receives downlink semi-persistent scheduling DL SPS from the first beam within a channel occupancy time of the first beam. After an SPS resource is activated, the terminal device may receive and send data by using the activated SPS resource. Therefore, the terminal device receives the DL SPS from the first beam, in other words, receives the downlink data from the first beam.

Optionally, the first indication information includes the at least one beam identity and a channel unoccupied time corresponding to each of the at least one beam identity. That, within the channel unoccupied time, the terminal device skips performing downlink measurement, skips receiving the downlink data, skips sending a HARQ feedback corresponding to the downlink data, or determines that a downlink measurement result is invalid includes: If the beam identity included in the first indication information includes the beam identity of the first beam included in the downlink resource configured by the network device for the terminal device, within a channel unoccupied time of the first beam, the terminal device skips performing downlink measurement on the first beam, skips receiving the downlink data from the first beam, skips sending the HARQ feedback corresponding to the downlink data, or determines that a downlink measurement result of the first beam is invalid.

In this embodiment of this application, when the first indication information includes the channel occupancy time of the first beam, and the network device configures the corresponding downlink resource for the terminal device (where the first beam is the downlink transmit beam in the downlink resource configured by the network device for the terminal device), the terminal device performs downlink measurement on the first beam, and/or receives the downlink data from the first beam within the channel occupancy time of the first beam. Direction-based channel occupancy indication information (that is, the first indication information) is provided. Therefore, unnecessary measurement can be reduced, and measurement efficiency and accuracy of a measurement result can be improved.

With reference to the first aspect, in a possible implementation, the first indication information may further include an identifier of a TRP to which each beam identified by the at least one beam identity belongs and/or an identifier of a serving cell covered by the beam. The identifier of the TRP included in the first indication information is used to notify the terminal device of a TRP for which the channel occupancy information of the network device is specific. The identifier of the serving cell included in the first indication information is used to notify the terminal device of a cell for which the channel occupancy information of the network device is specific. One cell may be covered by a plurality of beams (beams) in different directions. One cell may include a plurality of TRPs, and one TRP may have a plurality of beams.

The first indication information in this embodiment of this application not only includes the beam identity and the channel occupancy information, but may also include the identifier of the TRP and/or the identifier of the serving cell, so that the terminal device can more accurately locate a beam on a TRP and/or a beam in a serving cell occupied or not occupied by the channel. When the beam identity is multiplexed, a beam occupied by the channel or a beam not occupied by the channel can also be accurately located, thereby improving accuracy of subsequent downlink measurement, and ensuring subsequent reception of the downlink data.

With reference to the first aspect, in a possible implementation, the first indication information includes the cell identity and the channel occupancy time. That the terminal device performs downlink measurement and/or receives downlink data within the channel occupancy time includes: If the cell identity included in the first indication information is an identifier of a serving cell included in the downlink resource configured by the network device for the terminal device, within the channel occupancy time, the terminal device receives the DL SPS from the serving cell identified by the cell identity and/or performs downlink measurement on the serving cell.

With reference to the first aspect, in a possible implementation, the first indication information includes the cell identity and the channel unoccupied time. That, within the channel unoccupied time, the terminal device skips performing downlink measurement, skips receiving the downlink data, skips sending a HARQ feedback corresponding to the downlink data, or determines that a downlink measurement result is invalid includes: If the cell identity included in the first indication information is the identifier of the serving cell included in the downlink resource configured by the network device for the terminal device, within the channel unoccupied time, the terminal device skips receiving the DL SPS from the serving cell identified by the cell identity, skips sending a HARQ feedback corresponding to the DL SPS, skips performing downlink measurement on the serving cell, or determines that a downlink measurement result of the serving cell is invalid.

In this embodiment of this application, when the first indication information indicates the channel unoccupied time, even if the network device configures the corresponding downlink resource for the terminal device (to be specific, the cell identity included in the first indication information is the identifier of the serving cell of the terminal device included in the downlink resource), within the channel unoccupied time, the terminal device skips receiving the downlink data from the serving cell identified by the cell identity, skips sending the HARQ feedback corresponding to the downlink data, skips performing downlink measurement on the serving cell, or determines that the downlink measurement result of the serving cell is invalid. Omnidirectional-based channel occupancy indication information is provided, to reduce unnecessary measurement, and reduce energy consumption of the terminal device.

With reference to the first aspect, in a possible implementation, the first indication information may be carried on a GC-PDCCH for sending.

With reference to the first aspect, in a possible implementation, downlink measurement may include downlink signal measurement and/or downlink channel measurement. Downlink signal measurement may include one or more of the following: CSI measurement, beam RSRP measurement, or beam failure detection. Downlink channel measurement includes PDCCH detection.

According to a second aspect, an embodiment of this application provides another communication method. The method is applicable to a network device, and the method includes: The network device performs LBT to obtain an LBT result; and sends first indication information to a terminal device. The first indication information indicates channel occupancy information of the network device. The channel occupancy information includes a channel occupancy time and/or a channel unoccupied time. When the first indication information indicates the channel occupancy time of the network device, the first indication information indicates the terminal device to perform downlink measurement and/or receive downlink data within the channel occupancy time. When the first indication information indicates the channel unoccupied time of the network device, the first indication information indicates, within the channel unoccupied time, the terminal device to skip performing downlink measurement, skip receiving the downlink data, skip sending a HARQ feedback corresponding to the downlink data, or determine that a downlink measurement result is invalid.

Optionally, the first indication information may include at least one beam identity and channel occupancy information corresponding to each of the at least one beam identity. The beam identity included in the first indication information may be used to notify the terminal device of a beam for which the channel occupancy information of the network device is specific. The channel occupancy information corresponding to the beam identity included in the first indication information may be used to notify the terminal device of an LBT result of the network device. The channel occupancy time may include a channel occupancy start time and channel occupancy duration. The channel unoccupied time may include unoccupied duration of the channel.

Optionally, the first indication information may alternatively include a cell identity and the channel occupancy information.

With reference to the second aspect, in a possible implementation, the first indication information includes the at least one beam identity and a channel occupancy time corresponding to each of the at least one beam identity. When the first indication information indicates the channel occupancy time of the network device, the first indication information specifically indicates, when the beam identity included in the first indication information includes a beam identity of a first beam included in a downlink resource configured by the network device for the terminal device, the terminal device to perform downlink measurement on the first beam, and/or receive DL SPS from the first beam within a channel occupancy time of the first beam.

Optionally, the first indication information includes the at least one beam identity and a channel unoccupied time corresponding to each of the at least one beam identity. When the first indication information indicates the channel unoccupied time of the network device, the first indication information further specifically indicates, when the beam identity included in the first indication information includes the beam identity of the first beam included in the downlink resource configured by the network device for the terminal device, within a channel unoccupied time of the first beam, the terminal device to skip performing downlink measurement on the first beam, skip receiving the downlink data from the first beam, skip sending the HARQ feedback corresponding to the downlink data, or determine that a downlink measurement result of the first beam is invalid.

With reference to the second aspect, in a possible implementation, the first indication information may further include an identifier of a TRP to which each beam identified by the at least one beam identity belongs and/or an identifier of a serving cell covered by the beam. The identifier of the TRP included in the first indication information is used to notify the terminal device of a TRP for which the channel occupancy information of the network device is specific. The identifier of the serving cell included in the first indication information is used to notify the terminal device of a cell for which the channel occupancy information of the network device is specific. One cell may be covered by a plurality of beams (beams) in different directions. One cell may include a plurality of TRPs, and one TRP may have a plurality of beams.

With reference to the second aspect, in a possible implementation, the first indication information includes the cell identity and the channel occupancy time. When the first indication information indicates the channel occupancy time of the network device, the first indication information specifically indicates, when the cell identity included in the first indication information is an identifier of a serving cell included in the downlink resource configured by the network device for the terminal device, within the channel occupancy time, the terminal device to receive the DL SPS from the serving cell identified by the cell identity or perform downlink measurement on the serving cell.

With reference to the second aspect, in a possible implementation, the first indication information includes the cell identity and the channel unoccupied time. When the first indication information indicates the channel unoccupied time of the network device, the first indication information further specifically indicates, when the cell identity included in the first indication information is the identifier of the serving cell included in the downlink resource configured by the network device for the terminal device, within the channel unoccupied time, the terminal device to skip receiving the DL SPS from the serving cell identified by the cell identity, skip sending a HARQ feedback corresponding to the DL SPS, skip performing downlink measurement on the serving cell, or determine that a downlink measurement result of the serving cell is invalid.

With reference to the second aspect, in a possible implementation, the first indication information may be carried on a GC-PDCCH for sending.

With reference to the second aspect, in a possible implementation, downlink measurement may include downlink signal measurement and/or downlink channel measurement. Downlink signal measurement may include one or more of the following: CSI measurement, beam RSRP measurement, or beam failure detection. Downlink channel measurement includes PDCCH detection.

According to a third aspect, an embodiment of this application provides a computer-readable storage medium. The computer-readable storage medium stores computer program instructions. When the computer program instructions are run on a computer, the computer is enabled to perform the communication method described according to any one of the first aspect or the possible implementations of the first aspect.

According to a fourth aspect, an embodiment of this application provides another computer-readable storage medium. The computer-readable storage medium stores computer program instructions. When the computer program instructions are run on a computer, the computer is enabled to perform the communication method described according to any one of the second aspect or the possible implementations of the second aspect.

According to a fifth aspect, an embodiment of this application provides a program product including instructions. When the program product runs, the communication method described according to any one of the first aspect or the possible implementations of the first aspect is performed.

According to a sixth aspect, an embodiment of this application provides a program product including instructions. When the program product runs, the communication method described according to any one of the second aspect or the possible implementations of the second aspect is performed.

According to an aspect, during implementation of embodiments of this application, direction-based channel occupancy indication information may be provided. According to another aspect, during implementation of embodiments of this application, when the indication information indicates that a channel is occupied, downlink measurement may not be performed, and when the indication information indicates that the channel is not occupied, downlink measurement may be performed. Therefore, unnecessary measurement is reduced, a downlink measurement failure caused because a network side does not preempt the channel is excluded, and measurement efficiency and accuracy of a measurement result are improved.

### BRIEF DESCRIPTION OF DRAWINGS

FIG. 1A is a schematic diagram of a system architecture of a mobile communication system according to an embodiment of this application;
FIG. 1B is a schematic diagram of a 5G network architecture according to an embodiment of this application;
FIG. 2 is a schematic flowchart of a communication method according to an embodiment of this application;
FIG. 3 is a schematic diagram of an idle beam on a network side according to an embodiment of this application;
FIG. 4 is another schematic flowchart of a communication method according to an embodiment of this application;
FIG. 5 is a schematic diagram of a structure of a terminal device according to an embodiment of this application;
FIG. 6 is a schematic diagram of a structure of a network device according to an embodiment of this application; and
FIG. 7 is a schematic diagram of a structure of a communication apparatus according to an embodiment of this application.

### DESCRIPTION OF EMBODIMENTS

The following describes technical solutions in embodiments of this application with reference to the accompanying drawings in embodiments of this application.

To facilitate understanding a communication method provided in embodiments of this application, the following briefly describes some terms (nouns) in the communication method provided in embodiments of this application.

### 1. Listen before talk (listen before talk, LBT)

An LBT technology is also referred to as carrier sense multiple access (Carrier Sense Multiple Access, CSMA), and means that a transmission site first monitors a channel to determine whether another site transmits data. If the channel is idle, the transmission site may transmit the data; otherwise, the transmission site avoids the channel for a period of time and then attempts to transmit the data. The LBT mentioned in embodiments of this application may be direction-based LBT. To be specific, the transmission site monitors whether another site transmits the data on the channel in different directions (or beams beams). If detecting that another site transmits the data on the channel in a direction, the transmission site considers that the channel is busy in the direction. If detecting that no other site transmits data on the channel in a direction, the transmission site considers that the channel is idle in the direction. If the channel is idle in a direction, the transmission site may transmit data in the direction.

### 2. Channel state information (channel state information, CSI)

In the field of wireless communication, the channel state information CSI is a channel attribute of a communication link. The CSI describes a fading factor of a signal on each transmission path, that is, a value of each element in a channel gain matrix H, for example, information such as signal scattering, environment fading, distance attenuation, and the like. The CSI may enable a communication system to adapt to a current channel condition, to provide assurance for high-reliability and high-rate communication in a multi-antenna system. Generally, a receive end receives a reference signal, estimates the CSI based on the reference signal, quantizes the CSI, and feeds back the quantized CSI to a transmit end.

### 3. Physical downlink control channel (physical downlink control channel, PDCCH)

The PDCCH is a set of physical resource elements, and carries uplink and downlink control information. According to different scopes of the PDCCH, the information carried in the PDCCH is classified into common control information (common search space) and dedicated control information (dedicated search space). Search space defines a start location and a channel search manner of blind detection. The PDCCH mainly carries channel control information (including control information such as resource allocation, a frequency hopping type, and a transmission mode), that is, downlink control information (downlink control information, DCI), of a physical uplink shared channel (physical uplink shared channel, PUSCH) and a physical downlink shared channel (physical downlink shared channel, PDSCH). The DCI includes resource allocation and other control information of one or more terminals. PDCCH information of different terminals is distinguished by using radio network temporary identifier (radio network temporary identity, RNTI) information corresponding to the terminals. To be specific, cyclic redundancy check (cyclic redundancy check, CRC) of DCI of the terminals is scrambled by using RNTIs corresponding to the terminals.

### 4. Reference signal received power (reference signal received power, RSRP)

The RSRP is an average value of signal powers received on all resource elements (resource elements, REs) that carry reference signals (reference signals) in a symbol (symbol). A beam RSRP means an RSRP on a beam.

### 5. Beam failure detection (beam failure detecting)

A beam failure means that quality of a serving beam is lower than a threshold. Beam failure detection is to detect a block error rate (block error rate, BLER) on a beam. When a BLER on a beam is greater than the threshold, the beam is considered to be faulty at this time.

### 6. Hybrid automatic repeat request (hybrid automatic repeat request, HARQ)

In a wireless transmission environment, channel transmission quality is poor due to fading caused by channel noise and mobility and interference from other users. Therefore, a data packet needs to be protected from various types of interference. The protection is mainly to use a forward error correction code to transmit an additional bit in the packet. However, excessive forward error correction codes lead to low transmission efficiency. The HARQ can efficiently compensate for a bit error caused by link adaptation, to increase a data transmission rate, and reduce a data transmission delay. A HARQ mechanism is used to save received data and request a sender to retransmit the data when a receiver fails to decode the data. The receiver combines the retransmitted data with the previously received data and then decodes the data. Therefore, a quantity of retransmissions is reduced, and a delay is further reduced.

The foregoing briefly describes some terms (nouns) in the communication method provided in embodiments of this application. The following describes a system architecture of the communication method provided in embodiments of this application.

The communication method provided in embodiments of this application may be applied to a mobile communication system operating in an unlicensed spectrum, for example, a long term evolution (long term evolution, LTE) technology, 4.5G, a 5^{th} generation (5G) mobile communication system, or a future mobile communication system. The unlicensed spectrum may include a 2.4 GHz or 5 GHz frequency band. For ease of understanding, a system architecture of the mobile communication system is first briefly described in embodiments of this application.

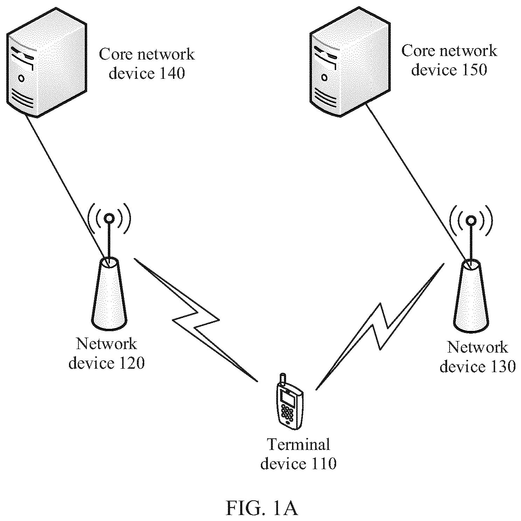

FIG. 1A is a schematic diagram of a system architecture of a mobile communication system according to an embodiment of this application. As shown in FIG. 1A, the mobile communication system may include at least one terminal device (a terminal device 110 in FIG. 1A) and at least one network device (a network device 120 and a network device 130 in FIG. 1A). Optionally, the mobile communication system may further include at least one core network device, for example, a core network device 140 and a core network device 150 in FIG. 1A. The terminal device 110 may be connected to the network device 120 and/or the network device 130 in a wireless manner. The terminal device may be located at a fixed position, or may be mobile. The network device 120 may access the core network device 140, and the network device 130 may access the core network device 150. Optionally, the network device 120 and the network device 130 may jointly access one core network device. FIG. 1A is merely a schematic diagram. The mobile communication system may further include another network device, for example, may further include a wireless relay device and/or a wireless backhaul device, which are/is not shown in FIG. 1A. Quantities of terminal devices, network devices, and/or core network devices included in the mobile communication system are not limited in this embodiment of this application.

The terminal device 110 may be an entity, for example, a mobile phone UE, that is configured to receive or transmit a signal on a user side. The terminal device may also be referred to as a terminal Terminal, UE, a mobile station (mobile station, MS), a mobile terminal (mobile terminal, MT), or the like. The terminal device may be a mobile phone (mobile phone), a tablet (Pad), a computer with a wireless transceiver function, or the like. A specific technology and a specific device form that are used by the terminal device are not limited in embodiments of this application.

The network device may be an entity, for example, a gNB, that is configured to transmit or receive a signal on a network side. The network device may alternatively be an access device that connects the terminal device to the mobile communication system in a wireless manner. For example, the network device may be a NodeB NodeB, an evolved NodeB (evolved NodeB, eNB), a transmission reception point (transmission reception point, TRP), a next generation NodeB (next generation NodeB, gNB) in a 5G mobile communication system, or a base station in a future mobile communication system. A specific technology and a specific device form that are used by the network device are not limited in embodiments of this application.

In some feasible implementations, the network device 120 and the network device 130 may be network devices of different operators, and may work on a same unlicensed frequency band. At a same moment, the terminal device 110 may communicate with one network device (the network device 120 or the network device 130).

The core network device may be a 4G core network device, or may be a 5G core network device.

In some feasible implementations, the terminal device and the network device in the mobile communication system may be deployed on land, and include indoor, outdoor, handheld, or vehicle-mounted devices.

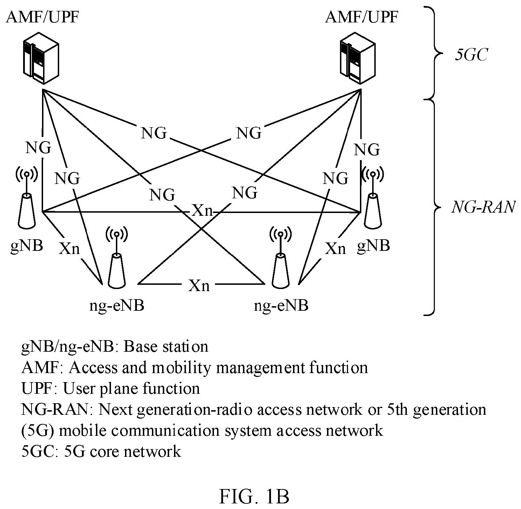

Specifically, if both the core network device 140 and the core network device 150 in FIG. 1A are 5G core network devices, FIG. 1B is a schematic diagram of a 5G network architecture according to an embodiment of this application. As shown in FIG. 1B, the 5G network architecture mainly includes a 5G access network (namely, a next generation-radio access network (next generation-radio access network, NG-RAN)) and a 5G core (5G core, 5GC) network. The 5G access network (namely, the NG-RAN) mainly includes two types of nodes: a gNB and a ng-eNB. The gNB is a node that provides user-plane and control-plane protocol terminals of a new radio (new radio, NR) for the UE. The ng-eNB is a node that provides user-plane and control-plane protocol terminals of evolved universal terrestrial radio access (evolved universal terrestrial radio access, E-UTRA) for the UE. Connection may be established between the gNB and the gNB, the gNB and the ng-eNB, or the ng-eNB and ng-eNB through an Xn interface. The Xn interface is a network interface between NG-RAN nodes. Connections may be established between the gNB and the 5GC (core network), and the ng-eNB and the 5GC (core network) through NG interfaces. Specifically, the gNB is connected to an access and mobility management function (access and mobility management function, AMF) through an NG-C interface, and is connected to a user plane function (user plane function, UPF) through an NR-U interface. The NG-C interface is a control-plane interface between the NG-RAN and the 5GC, and the NG-U interface is a user-plane interface between the NG-RAN and the 5GC.

The foregoing content describes a system architecture of the communication method provided in embodiments of this application. The following describes in detail the communication method provided in embodiments of this application with reference to scenarios in this application.

A basis of wireless communication is spectrum resources. The spectrum resources may be classified into two types: a licensed spectrum and an unlicensed spectrum. The licensed spectrum can be used only by a specific operator in a place, and the unlicensed spectrum can be used by any operator and is a shared spectrum resource. In the unlicensed spectrum, a plurality of devices (such as base stations, terminals, or wireless network accessing devices) may share a same unlicensed spectrum based on an LBT channel contention access mechanism.

For example, a device 1, a device 2, and a device 3 share a same unlicensed frequency band (for example, 5.925 GHz to 6.425 GHz). It is assumed that both the device 1 and the device 2 want to send data to the device 3. To reduce data transmission collisions and data sending retries, both the device 1 and the device 2 need to perform LBT before sending the data, to monitor whether a channel is idle. If the device 1 detects that the channel is idle, the device 1 may obtain a channel occupancy time. To ensure a data sending success rate of the device 1, the device 1 may notify other devices (for example, the device 2 and the device 3) of the channel occupancy time of the preempted channel, so that the device 2 and the device 3 know that the channel occupancy time belongs to the device 1, and do not send data within the channel occupancy time.

A frequency band used in 5G is high, and a path loss at a high frequency is large. Directional transmission (namely, beam-based transmission) is used to compensate for the path loss. Different directions (or beams) are independent of each other, and basically have no interference. Therefore, in the 5G, LBT of a device working on the unlicensed frequency band may be direction-based (or beam-based). However, the channel occupancy time notified by the device 1 to the other devices is applicable only to omnidirectional-based LBT, and is not applicable to direction-based (or beam-based) LBT. In other words, the device 1 does not notify the other devices of direction information of the channel occupancy time.

Therefore, embodiments of this application provide a communication method. In the communication method, direction-based channel occupancy indication information is provided. When the indication information indicates that a channel on a beam is occupied, downlink measurement is not performed, and when the indication information indicates that a channel on a beam is not occupied, downlink measurement is performed on the beam. Therefore, downlink measurement efficiency and accuracy of a downlink measurement result can be improved.

It may be understood that all devices (including the terminal device and the network device) in embodiments of this application may work in the unlicensed spectrum, and need to perform direction-based LBT before sending data. The terminal device in embodiments of this application may be the terminal device 110 in FIG. 1A. The network device may be the network device 120 or the network device 130 in FIG. 1A, or the network device may be any gNB or ng-eNB in FIG. 1B. This is not limited in embodiments of this application.

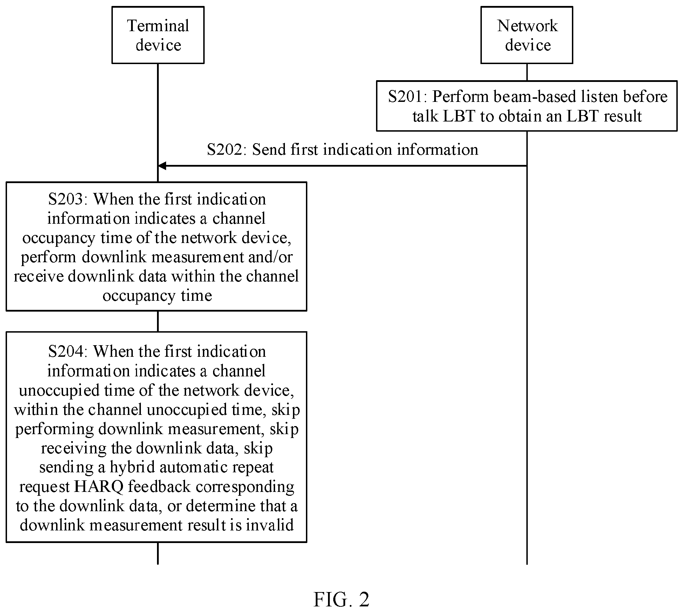

FIG. 2 is a schematic flowchart of a communication method according to an embodiment of this application. As shown in FIG. 2, the communication method provided in this embodiment of this application includes but is not limited to the following steps.

S201: A network device performs beam-based listen before talk LBT to obtain an LBT result.

In some feasible implementations, the network device may receive a signal of each channel on each beam (or in each direction), and may perform signal strength measurement on the signal of the channel on the beam (or in the direction). The network device may obtain a preset signal strength threshold. If a measured signal strength of a channel on a beam (or in a direction) is greater than the signal strength threshold, it indicates that data transmission is not performed on the channel on the beam (or in the direction) at this time. In this case, the network device determines that the channel is idle on the beam (or in the direction), and determines a channel occupancy time of the network device on the beam (or in the direction) of the channel. If a measured signal strength of a channel on a beam (or in a direction) is less than or equal to the signal strength threshold, it indicates that data transmission is performed on the channel on the beam (or in the direction) at this time. In this case, the network device determines that the channel is busy on the beam (or in the direction), and determines a backoff time (namely, a channel unoccupied time) of the network device on the beam (or in the direction) of the channel. The backoff time (namely, the channel unoccupied time) may be a preset time. For example, the backoff time or the channel unoccupied time is 5 ms (milliseconds). The channel occupancy time may be determined based on a size of to-be-transmitted data. After performing LBT on each beam (or direction) of each channel, the network device obtains an LBT result (to be specific, whether the channel is idle or busy, a channel occupancy time, or a channel unoccupied time) of the beam of the channel.

For example, it is assumed that the network device needs to monitor two channels: a channel 1 and a channel 2. The channel 1 has four beams (beams) in different directions: a beam 1, a beam 2, a beam 3, and a beam 4. The channel 2 also has four beams in different directions: a beam 5, a beam 6, a beam 7, and a beam 8. For the channel 1, the network device may separately receive signals on the beam 1, the beam 2, the beam 3, and the beam 4, and separately perform signal strength measurement on the signals on the beam 1, the beam 2, the beam 3, and the beam 4. If measured signal strengths on the beam 1 and the beam 2 each are greater than the signal strength threshold, the network device determines that the channel 1 is idle on the beam 1 and the beam 2, and determines channel occupancy times of the network device on the beam 1 and the beam 2 of the channel 1 based on the size of the to-be-transmitted data. If measured signal strengths on the beam 3 and the beam 4 each are less than or equal to the signal strength threshold, the network device determines that the channel 1 is busy on the beam 3 and the beam 4, and obtains preset channel unoccupied times (namely, backoff times) of the channel 1 on the beam 3 and the beam 4. Similarly, for the channel 2, the network device may separately receive signals on the beam 5, the beam 6, the beam 7, and the beam 8, and separately perform signal strength measurement on the signals on the beam 5, the beam 6, the beam 7, and the beam 8. If a measured signal strength on the beam 7 is greater than the signal strength threshold, the network device determines that the channel 1 is idle on the beam 7, and determines a channel occupancy time of the network device on the beam 7 of the channel 2 based on the size of the to-be-transmitted data. If measured signal strengths on the beam 5, the beam 6, and the beam 8 each are less than or equal to the signal strength threshold, the network device determines that the channel 2 is busy on the beam 5, the beam 6, and the beam 8, and obtains preset channel unoccupied times (namely, backoff times) of the channel 2 on the beam 5, the beam 6, and the beam 8. In conclusion, the LBT result, of each beam of each channel, obtained by the network device by performing LBT may be that the channel 1 is idle on the beam 1 and the beam 2 and include the channel occupancy times; that the channel 1 is busy on the beam 3 and the beam 4 and include the channel unoccupied times; that the channel 2 is idle on the beam 7 and include the channel occupancy time; and that the channel 2 is busy on the beam 5, the beam 6, and the beam 8 and include the channel unoccupied times.

Optionally, preset channel unoccupied times (namely, backoff times) on different beams may be the same or may be different. For example, the preset channel unoccupied time of the channel 2 on the beam 5 is 5 ms, the preset channel unoccupied time of the channel 2 on the beam 6 is 7 ms, and the preset channel unoccupied time of the channel 2 on the beam 8 is 4 ms.

S202: The network device sends first indication information to a terminal device. Correspondingly, the terminal device receives the first indication information.

In some feasible implementations, the first indication information may indicate channel occupancy information of the network device. The channel occupancy information may be used to represent a channel occupancy status obtained after the network device performs beam-based LBT. For example, the channel occupancy information may include a channel occupancy time of the channel on a beam, and/or a channel unoccupied time of the channel on a beam. The first indication information may include at least one beam identity and channel occupancy information corresponding to each of the at least one beam identity. The beam identity included in the first indication information may be used to notify the terminal device of a beam for which the channel occupancy information of the network device is specific. The channel occupancy information corresponding to the beam identity included in the first indication information may be used to notify the terminal device of an LBT result of the network device. The channel occupancy information may include the channel occupancy time and/or the channel unoccupied time. The channel occupancy time may include a channel occupancy start time and channel occupancy duration. The channel unoccupied time may include unoccupied duration of the channel.

Optionally, the first indication information may further include an identifier of a transmission reception point (transmission reception point, TRP) to which each beam identified by the at least one beam identity belongs and/or an identifier of a serving cell covered by the beam. The identifier of the TRP included in the first indication information is used to notify the terminal device of a TRP for which the channel occupancy information of the network device is specific. The identifier of the serving cell included in the first indication information is used to notify the terminal device of a cell for which the channel occupancy information of the network device is specific. One cell may be covered by a plurality of beams (beams) in different directions. One cell may include a plurality of TRPs, and one TRP may have a plurality of beams. The first indication information in this embodiment of this application not only includes the beam identity and the channel occupancy information, but may also include the identifier of the TRP and/or the identifier of the serving cell, so that the terminal device can more accurately locate a beam on a TRP and/or a beam in a serving cell occupied or not occupied by the channel. When the beam identity is multiplexed, a beam occupied by the channel or a beam not occupied by the channel can also be accurately located, thereby improving accuracy of subsequent downlink measurement, and ensuring subsequent reception of downlink data.

In some feasible implementations, after obtaining the LBT result, the network device may send the first indication information in a broadcast manner. Correspondingly, the terminal device may receive the first indication information. Optionally, the network device may alternatively send the first indication information to the terminal device in a unicast manner. Correspondingly, the terminal device may receive the first indication information. If the network device sends the first indication information in the broadcast manner, the first indication information may be carried on a group common physical downlink control channel (group common physical downlink control channel, GC-PDCCH) for sending. If the network device sends the first indication information in the unicast manner, the first indication information may be a dedicated PDCCH. The first indication information may indicate the channel occupancy information of the network device. The channel occupancy information may include the channel occupancy time and/or the channel unoccupied time. It may be understood that when the network device sends the first indication information to the terminal device in the unicast manner, the first indication information is sent by using an idle beam in the LBT result.

In some feasible implementations, because one gNB may manage a plurality of cells, and a coverage area of each cell may be provided by a plurality of TRPs, the network device may send the first indication information to the terminal device by using the TRPs. Specifically, the network device may send the first indication information to a TRP in the cell managed by the network device. After receiving the first indication information, the TRP may forward the first indication information to the terminal device. The first indication information may indicate the channel occupancy information of the network device. The channel occupancy information may include the channel occupancy time or the channel unoccupied time.

S203: When the first indication information indicates the channel occupancy time of the network device, the terminal device performs downlink measurement and/or receives the downlink data within the channel occupancy time.

In some feasible implementations, downlink measurement may include downlink signal measurement and/or downlink channel measurement. Downlink signal measurement may include one or more of the following: CSI measurement, beam RSRP measurement, or beam failure detection. Downlink channel measurement includes PDCCH detection.

In some feasible implementations, after receiving the first indication information, the terminal device may parse the first indication information. When the first indication information indicates the channel occupancy time of the network device, if parsing that the first indication information includes the at least one beam identity and a channel occupancy time corresponding to each of the at least one beam identity, the terminal device may detect whether there is a downlink resource configured by the network device for the terminal device. If there is the downlink resource configured by the network device for the terminal device, the terminal device may detect whether there is a beam identity of a first beam in the at least one beam identity. The first beam may be a downlink transmit beam in the downlink resource configured by the network device for the terminal device. If there is the beam identity of the first beam in the at least one beam identity, it indicates that the first beam preempted by the network device is preempted by the terminal device. In this case, the terminal device performs downlink measurement on the first beam, and/or receives downlink semi-persistent scheduling (downlink Semi-Persistent Scheduling, DL SPS) from the first beam within a channel occupancy time of the first beam. After an SPS resource is activated, the terminal device may receive and send data by using the activated SPS resource. Therefore, the terminal device receives the DL SPS from the first beam, in other words, receives the downlink data from the first beam. The channel occupancy time may include the channel occupancy start time and the channel occupancy duration. Optionally, if there is no downlink resource configured by the network device for the terminal device, the terminal device skips performing downlink measurement and/or skips receiving the downlink data.

In this embodiment of this application, when the first indication information includes the channel occupancy time of the first beam, and the network device configures the corresponding downlink resource for the terminal device (where the first beam is the downlink transmit beam in the downlink resource configured by the network device for the terminal device), the terminal device performs downlink measurement on the first beam, and/or receives the downlink data from the first beam within the channel occupancy time of the first beam. Therefore, unnecessary measurement can be reduced, and measurement efficiency and accuracy of a measurement result can be improved.

It may be understood that, that the terminal device performs downlink measurement on the first beam within a channel occupancy time of the first beam specifically includes: The network device sends a downlink reference signal or a PDCCH to the terminal device within the channel occupancy time of the first beam by using the first beam. The terminal device receives the downlink reference signal on the first beam, and performs CSI measurement, beam RSRP measurement, or beam failure detection on the first beam within the channel occupancy time of the first beam based on the downlink reference signal on the first beam. Alternatively, the terminal device receives the PDCCH on the first beam, and performs PDCCH detection on the first beam within the channel occupancy time of the first beam.

It may be further understood that before the terminal device receives the downlink data from the first beam, the network device sends the downlink data to the terminal device within the channel occupancy time of the first beam by using the first beam.

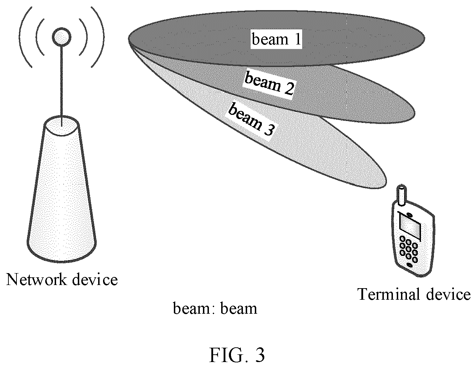

For example, FIG. 3 is a schematic diagram of an idle beam on a network side according to an embodiment of this application. As shown in FIG. 3, a beam 1, a beam 2, and a beam 3 on the network side are all idle. In this case, the first indication information includes three beam identities: the beam 1, the beam 2, and the beam 3, and channel occupancy times respectively corresponding to the three beam identities (it is assumed that the channel occupancy times corresponding to the identities are the same). For example, the channel occupancy time is a channel occupancy start time 1 ms, and channel occupancy duration 5 ms. It is assumed that the downlink transmit beam in the downlink resource configured by the network device for the terminal device is the beam 3 (in other words, the first beam is the beam 3). Because it is parsed that the first indication information includes the beam identities: the beam 1, the beam 2, and the beam 3, and the channel occupancy times respectively corresponding to the beam 1, beam 2, and beam 3, the terminal device detects whether there is the downlink resource configured by the network device for the terminal device. When detecting that there is the downlink resource configured by the network device for the terminal device, the terminal device detects whether the beam identity included in the first indication information includes the downlink transmit beam: the beam 3 included in the downlink resource. Because the first indication information includes the beam 3, it indicates that the beam 3 preempted by the network device is preempted for the terminal device. Therefore, the terminal device performs downlink measurement on the beam 3, and/or receives the downlink data from the beam 3 within the channel occupancy time (to be specific, the 1^{st} ms to the 6^{th} ms) of the beam 3.

S204: When the first indication information indicates the channel unoccupied time of the network device, within the channel unoccupied time, the terminal device skips performing downlink measurement, skips receiving the downlink data, skips sending a hybrid automatic repeat request HARQ feedback corresponding to the downlink data, or determines that a downlink measurement result is invalid.

In some feasible implementations, downlink measurement may include downlink signal measurement and/or downlink channel measurement. Downlink signal measurement may include one or more of the following: CSI measurement, beam RSRP measurement, or beam failure detection. Downlink channel measurement includes PDCCH detection.

In some feasible implementations, when the first indication information indicates the channel unoccupied time of the network device, if parsing that the first indication information includes one or more beam identities and a channel unoccupied time corresponding to the one or more beam identities, the terminal device may detect whether there is the downlink resource configured by the network device for the terminal device. If there is the downlink resource configured by the network device for the terminal device, and the one or more beam identities include the beam identity of the first beam included in the downlink resource, it indicates that the network device does not preempt the first beam for the terminal device. In this case, within a channel unoccupied time of the first beam, the terminal device skips performing downlink measurement on the first beam, skips receiving the DL SPS from the first beam, skips sending a HARQ feedback corresponding to the DL SPS, or determines that a downlink measurement result of the first beam is invalid. After the SPS resource is activated, the terminal device may receive and send data by using the activated SPS resource. Therefore, the terminal device skips receiving the DL SPS from the first beam, in other words, skips receiving the downlink data from the first beam; and skips sending the HARQ feedback corresponding to the DL SPS, in other words, skips sending the HARQ feedback corresponding to the downlink data. The first beam may be the downlink transmit beam in the downlink resource configured by the network device for the terminal device. The channel unoccupied time may include the unoccupied duration of the channel.

Optionally, if there is no downlink resource configured by the network device for the terminal device, the terminal device skips performing downlink measurement, skips receiving the downlink data, skips sending the HARQ feedback corresponding to the downlink data, or determines that the downlink measurement result is invalid.

In this embodiment of this application, when the first indication information includes the channel unoccupied time of the first beam, even if the network device configures the corresponding downlink resource for the terminal device (where the first beam is the downlink transmit beam in the downlink resource configured by the network device for the terminal device), within the channel unoccupied time of the first beam, the terminal device skips performing downlink measurement on the first beam, skips receiving the downlink data from the first beam, skips sending the HARQ feedback corresponding to the downlink data, or determines that the downlink measurement result of the first beam is invalid. This may exclude a downlink measurement failure caused because the network side does not preempt the channel, further reduce unnecessary measurement, and improve accuracy of a measurement result.

It may be understood that, that within a channel unoccupied time of the first beam, the terminal device skips performing downlink measurement on the first beam, skips receiving the DL SPS from the first beam, and skips sending a HARQ feedback corresponding to the DL SPS specifically includes: When not preempting the first beam, the network device does not send the downlink reference signal, the PDCCH, or the downlink data within the channel unoccupied time of the first beam by using the first beam. Because the network device skips sending the downlink data on the first beam, the terminal device cannot receive the downlink data on the first beam. According to a HARQ mechanism, the terminal device requests the network device to perform retransmission. Therefore, the terminal device skips sending the HARQ feedback within the channel unoccupied time of the first beam, to reduce signaling overheads.

It may be further understood that when not preempting the downlink transmit beam in the downlink resource configured for the terminal device, the network device cannot send the reference signal, the PDCCH, the downlink data, or the like by using the downlink transmit beam configured for the terminal device. Therefore, a result of CSI measurement, beam RSRP measurement, beam failure detection, or PDCCH detection performed by the terminal device on the first beam within the channel unoccupied time of the first beam is definitely a failure. The failure is caused because the network device does not preempt the downlink transmit beam configured for the terminal device. Therefore, a result of downlink measurement caused by the failure is invalid, and does not comply with an actual situation.

For example, it is assumed that the first indication information includes two beam identities: a beam 5 and a beam 8, a channel unoccupied time (for example, 4 ms) corresponding to the beam 5, and a channel unoccupied time (for example, 6 ms) corresponding to the beam 8. It is assumed that the downlink transmit beam in the downlink resource configured by the network device for the terminal device is the beam 8 (in other words, the first beam is the beam 8). Because the network device configures the downlink resource for the terminal device, and the beam identity included in the first indication information includes the downlink transmit beam: the beam 8 included in the downlink resource, it indicates that the network device does not preempt the beam 8 for the terminal device at this time. Therefore, within the channel unoccupied time (to be specific, 6 ms starting from a current time) of the beam 8, the terminal device skips performing downlink measurement on the beam 8, skips receiving the downlink data from the beam 8, skips sending the HARQ feedback corresponding to the downlink data, or determines that a downlink measurement result of the beam 8 is invalid.

In an optional embodiment, the first indication information may include N beam identities, channel occupancy times respectively corresponding to K beam identities in the N beam identities, and channel unoccupied times respectively corresponding to N-K beam identities in the N beam identities. Therefore, when the first indication information indicates both the channel occupancy time and the channel unoccupied time, the terminal device may detect whether there is the downlink resource configured by the network device for the terminal device. If there is the downlink resource configured by the network device for the terminal device, the terminal device may determine, based on the first indication information, channel occupancy information corresponding to the downlink transmit beam (namely, the first beam) included in the downlink resource. If determining that the channel occupancy information corresponding to the first beam is the channel occupancy time, the terminal device may perform downlink measurement on the first beam, and/or receive the downlink data from the first beam within the channel occupancy time of the first beam. If determining that the channel occupancy information corresponding to the first beam is the channel unoccupied time, within the channel unoccupied time of the first beam, the terminal device may skip performing downlink measurement on the first beam, skip receiving the downlink data from the first beam, skip sending the HARQ feedback corresponding to the downlink data, or determine that the downlink measurement result of the first beam is invalid. N is an integer greater than or equal to 2, and K is an integer greater than or equal to 1.

For example, it is assumed that the first indication information includes eight beam identities: a beam 1, a beam 2, a beam 3, a beam 4, a beam 5, a beam 6, a beam 7, and a beam 8, channel occupancy times respectively corresponding to three of the eight beam identities: the beam 1, the beam 2, and the beam 7, and channel unoccupied times respectively corresponding to five of the eight beam identities: the beam 3, the beam 4, the beam 5, the beam 6, and the beam 8. It is assumed that the downlink transmit beam (namely, the first beam) included in the downlink resource configured by the network device for the terminal device is the beam 6. Because the network device configures the downlink resource for the terminal device, the terminal device may determine, based on the first indication information, channel occupancy information corresponding to the downlink transmit beam: the beam 6 included in the downlink resource. Because the channel occupancy information corresponding to the beam 6 in the first indication information is the channel unoccupied time, within the channel unoccupied time of the beam 6, the terminal device may skip performing downlink measurement on the beam 6, skip receiving the downlink data from the beam 6, skip sending the HARQ feedback corresponding to the downlink data, or determine that a downlink measurement result of the beam 6 is invalid. Similarly, it is assumed that the downlink transmit beam (namely, the first beam) included in the downlink resource configured by the network device for the terminal device is the beam 7. Because channel occupancy information corresponding to the beam 7 in the first indication information is the channel occupancy time, the terminal device may perform downlink measurement on the beam 7, and/or receive the downlink data from the beam 7 within the channel occupancy time of the beam 7.

In this embodiment of this application, the network device performs beam-based LBT to obtain the LBT result, and sends the first indication information to the terminal device. When the first indication information indicates the channel occupancy time of the network device, if parsing that the first indication information includes the at least one beam identity and the channel occupancy time corresponding to each of the at least one beam identity, and the beam identity included in the first indication information includes the downlink transmit beam (namely, the first beam) included in the downlink resource configured by the network device for the terminal device, the terminal device performs downlink measurement on the first beam, and/or receives the downlink data from the first beam within the channel occupancy time of the first beam. When the first indication information indicates the channel occupancy time of the network device, if parsing that the first indication information includes one or more beam identities and channel unoccupied time corresponding to the one or more beam identities, and the beam identity included in the first indication information includes the downlink transmit beam (namely, the first beam) included in the downlink resource configured by the network device for the terminal device, within the channel unoccupied time of the first beam, the terminal device skips performing downlink measurement on the first beam, skips receiving the downlink data from the first beam, skips sending the HARQ feedback corresponding to the downlink data, or determines that the downlink measurement result of the first beam is invalid. In this embodiment of this application, only when the network side preempts the downlink transmit beam included in the downlink resource configured for the terminal device, the terminal device performs downlink measurement on the downlink transmit beam and/or receives the downlink data from the downlink transmit beam. When the network side does not preempt the downlink transmit beam included in the downlink resource configured for the terminal device, the terminal device skips performing downlink measurement on the downlink transmit beam, skips receiving the downlink data from the downlink transmit beam, or the like. Therefore, not only direction-based channel occupancy indication information is provided, but also unnecessary measurement is reduced, a downlink measurement failure caused because the network side does not preempt the channel is excluded, and measurement efficiency and accuracy of a measurement result are improved.

In another optional embodiment, in the communication method provided in this embodiment of this application, omnidirectional-based channel occupancy indication information may be further provided. When the indication information indicates that the channel is occupied, downlink measurement is not performed, and when the indication information indicates that the channel is not occupied, downlink measurement is performed. Therefore, unnecessary downlink measurement can be reduced and power consumption of the terminal device can be reduced.

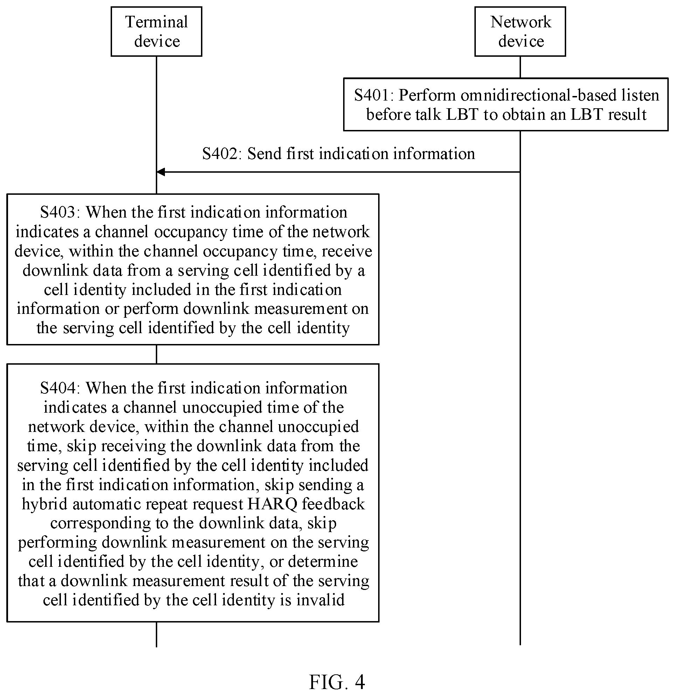

FIG. 4 is another schematic flowchart of a communication method according to an embodiment of this application. As shown in FIG. 4, the communication method provided in this embodiment of this application includes but is not limited to the following steps.

S401: A network device performs omnidirectional-based listen before talk LBT to obtain an LBT result.

In some feasible implementations, the network device may receive signals of each channel in all directions, and may perform signal strength measurement on the signals of the channel in all directions. The network device may obtain a preset signal strength threshold. If a measured signal strength on a channel is greater than the signal strength threshold, it indicates that data transmission is not performed on the channel at this time. In this case, the network device determines that the channel is idle, and determines a channel occupancy time of the network device on the channel. If a measured signal strength on a channel is less than or equal to the signal strength threshold, it indicates that data transmission is performed on the channel at this time. In this case, the network device determines that the channel is busy, and determines a backoff time (namely, a channel unoccupied time) of the network device on the channel. The backoff time (namely, the channel unoccupied time) may be a preset time. For example, the backoff time or the channel unoccupied time is 5 ms (milliseconds). The channel occupancy time may be determined based on a size of to-be-transmitted data. After performing omnidirectional-based LBT on each channel, the network device obtains an LBT result (to be specific, whether the channel is idle or busy, a channel occupancy time, or a channel unoccupied time) of the channel.

For example, it is assumed that the network device needs to monitor four channels: a channel 1, a channel 2, a channel 3, and a channel 4. The network device may separately receive signals of the channel 1, the channel 2, the channel 3, and the channel 4 in all directions, and may perform signal strength measurement on the signals of the channels in all directions. If a measured signal strength on the channel 3 is greater than the signal strength threshold, the network device determines that the channel 3 is idle, and determines a channel occupancy time of the network device on the channel 3 based on the size of the to-be-transmitted data. If measured signal strengths on the channel 1, the channel 2, and the channel 3 each are less than or equal to the signal strength threshold, the network device determines that the channel 1, the channel 2, and the channel 3 are all busy, and obtains preset channel unoccupied times (namely, backoff times) on the channel 1, the channel 2, and the channel 3.

Optionally, preset channel unoccupied times (namely, backoff times) on different channels may be the same or may be different. For example, the preset channel unoccupied time on the channel 1 is 3 ms, and the preset channel unoccupied time on the channel 2 is 10 ms.

S402: The network device sends first indication information to a terminal device. Correspondingly, the terminal device receives the first indication information.

In some feasible implementations, the first indication information may indicate channel occupancy information of the network device. The channel occupancy information may be used to represent a channel occupancy status obtained after the network device performs omnidirectional-based LBT. The first indication information may include a cell identity and the channel occupancy information. The channel occupancy information includes the channel occupancy time or the channel unoccupied time. The channel occupancy time may include a channel occupancy start time and channel occupancy duration. The channel unoccupied time may include unoccupied duration of the channel.

In some feasible implementations, after obtaining the LBT result, the network device may determine a cell to which an idle channel in the LBT result belongs and a cell to which a non-idle channel (namely, a busy channel) in the LBT result belongs. For example, the channel 3 is idle, and the network device determines a cell to which the channel 3 belongs. The channel 1, the channel 2, and the channel 4 are busy, and the network device determines cells to which the channel 1, the channel 2, and the channel 4 respectively belong. After determining the cell corresponding to the idle channel and/or the cell corresponding to the non-idle channel (namely, the busy channel) in the LBT result, the network device may send the first indication information to the terminal device in a broadcast manner. Correspondingly, the terminal device may receive the first indication information. Optionally, the network device may alternatively send the first indication information to the terminal device in a unicast manner. Correspondingly, the terminal device may receive the first indication information. If the network device sends the first indication information in the broadcast manner, the first indication information may be carried on a GC-PDCCH for sending. If the network device sends the first indication information in the unicast manner, the first indication information may be a dedicated PDCCH. The first indication information may indicate the channel occupancy time and/or the channel unoccupied time of the network device. It may be understood that when the network device sends the first indication information to the terminal device in the unicast manner, the first indication information is sent on the idle channel included in the LBT result.

In some feasible implementations, because one gNB may manage a plurality of cells, and a coverage area of each cell may be provided by a plurality of TRPs, the network device may send the first indication information to the terminal device by using the TRPs. Specifically, the network device may send the first indication information to a TRP in the cell managed by the network device. After receiving the first indication information, the TRP may forward the first indication information to the terminal device. The first indication information may indicate the channel occupancy time or the channel unoccupied time of the network device.

S403: When the first indication information indicates the channel occupancy time of the network device, within the channel occupancy time, the terminal device receives downlink data from a serving cell identified by the cell identity included in the first indication information or performs downlink measurement on the serving cell identified by the cell identity.

In some feasible implementations, downlink measurement may include downlink signal measurement and/or downlink channel measurement. Downlink signal measurement may include one or more of the following: CSI measurement, beam RSRP measurement, or beam failure detection. Downlink channel measurement includes PDCCH detection.

In some feasible implementations, after receiving the first indication information, the terminal device may parse the first indication information. When the first indication information indicates the channel occupancy time of the network device, if parsing that the first indication information includes the cell identity and the channel occupancy time, the terminal device may detect whether there is a downlink resource configured by the network device for the terminal device. For ease of description, the following uses an example in which the first indication information includes one cell identity and one channel occupancy time for descriptions. If there is the downlink resource configured by the network device for the terminal device, the terminal device may detect whether the cell identity included in the first indication information is an identifier of a serving cell of the terminal device included in the downlink resource. If the cell identity included in the first indication information is the identifier of the serving cell of the terminal device included in the downlink resource, within the channel occupancy time, the terminal device receives DL SPS from the serving cell identified by the cell identity or performs downlink measurement on the serving cell identified by the cell identity. After an SPS resource is activated, the terminal device may receive and send data by using the activated SPS resource. Therefore, the terminal device receives the DL SPS from the serving cell identified by the cell identity, in other words, receives the downlink data from the serving cell identified by the cell identity. The channel occupancy time may include the channel occupancy start time and the channel occupancy duration.

Optionally, if there is no downlink resource configured by the network device for the terminal device, the terminal device skips performing downlink measurement and/or skips receiving the downlink data.

Optionally, if the cell identity included in the first indication information is not the identifier of the serving cell of the terminal device included in the downlink resource, the terminal device skips receiving the downlink data from the serving cell identified by the cell identity, or skips performing downlink measurement on the serving cell identified by the cell identity.

S404: When the first indication information indicates the channel unoccupied time of the network device, within the channel unoccupied time, the terminal device skips receiving the downlink data from the serving cell identified by the cell identity included in the first indication information, skips sending a HARQ feedback corresponding to the downlink data, skips performing downlink measurement on the serving cell identified by the cell identity, or determines that a downlink measurement result of the serving cell identified by the cell identity is invalid.

In some feasible implementations, downlink measurement may include downlink signal measurement and/or downlink channel measurement. Downlink signal measurement may include one or more of the following: CSI measurement, beam RSRP measurement, or beam failure detection. Downlink channel measurement includes PDCCH detection.

In some feasible implementations, when the first indication information indicates the channel unoccupied time of the network device, if parsing that the first indication information includes the cell identity and the channel unoccupied time, the terminal device may detect whether there is the downlink resource configured by the network device for the terminal device. For ease of description, the following uses an example in which the first indication information includes one cell identity and one channel unoccupied time for descriptions. If there is the downlink resource configured by the network device for the terminal device, the terminal device may detect whether the cell identity included in the first indication information is the identifier of the serving cell of the terminal device included in the downlink resource. If the cell identity included in the first indication information is the identifier of the serving cell of the terminal device included in the downlink resource, within the channel unoccupied time, the terminal device skips receiving the DL SPS from the serving cell identified by the cell identity, skips sending a HARQ feedback corresponding to the DL SPS, skips performing downlink measurement on the serving cell identified by the cell identity, or determines that the downlink measurement result of the serving cell identified by the cell identity is invalid. After the SPS resource is activated, the terminal device may receive and send data by using the activated SPS resource. Therefore, the terminal device skips receiving the DL SPS from the serving cell identified by the cell identity, in other words, skips receiving the downlink data from the serving cell identified by the cell identity, and skips sending the HARQ feedback corresponding to the DL SPS, in other words, skips sending the HARQ feedback corresponding to the downlink data. The channel unoccupied time may include the unoccupied duration of the channel.

In this embodiment of this application, when the first indication information indicates the channel unoccupied time, even if the network device configures the corresponding downlink resource (to be specific, the cell identity included in the first indication information is the identifier of the serving cell of the terminal device included in the downlink resource) for the terminal device, within the channel unoccupied time, the terminal device skips receiving the downlink data from the serving cell identified by the cell identity, skips sending the HARQ feedback corresponding to the downlink data, skips performing downlink measurement on the serving cell identified by the cell identity, or determines that the downlink measurement result of the serving cell identified by the cell identity is invalid. Therefore, unnecessary measurement can be reduced, and power consumption of the terminal device can be reduced.

It may be understood that the first indication information may include a plurality of cell identities and channel occupancy information corresponding to each of the plurality of cell identities. For example, the first indication information includes M cell identities, channel occupancy times respectively corresponding to Q cell identities in the M cell identities, and channel unoccupied times respectively corresponding to M-Q cell identities in the M cell identities.

Therefore, when the first indication information indicates both the channel occupancy time and the channel unoccupied time, the terminal device may detect whether there is the downlink resource configured by the network device for the terminal device. If there is the downlink resource configured by the network device for the terminal device, the terminal device may determine, based on the first indication information, channel occupancy information corresponding to a serving cell i of the terminal device included in the downlink resource. If determining that the channel occupancy information corresponding to the serving cell i is the channel occupancy time, the terminal device may perform downlink measurement on the serving cell i, and/or receive the downlink data from the serving cell i within the channel occupancy time. If determining that the channel occupancy information corresponding to the serving cell i is the channel unoccupied time, within the channel unoccupied time, the terminal device may skip performing downlink measurement on the serving cell i, skip receiving the downlink data from the serving cell i, skip sending the HARQ feedback corresponding to the downlink data, or determine that a downlink measurement result of the serving cell i is invalid.

For example, it is assumed that the first indication information includes three cell identities: A1, A2, and A3, a channel occupancy time corresponding to the cell identity A2 in the three cell identities, and channel unoccupied times respectively corresponding to two cell identities: A1 and A3 in the three cell identities. It is assumed that the downlink resource configured by the network device for the terminal device includes the serving cell A1 of the terminal device. Because the network device configures the downlink resource for the terminal device, the terminal device may determine, based on the first indication information, channel occupancy information corresponding to the serving cell A1 of the terminal device included in the downlink resource. Because the channel occupancy information corresponding to the serving cell A1 in the first indication information is the channel unoccupied time, within the channel unoccupied time corresponding to the cell identity A1, the terminal device may skip performing downlink measurement on the serving cell A1, skip receiving the downlink data from the serving cell A1, skip sending the HARQ feedback corresponding to the downlink data, or determine that a downlink measurement result of the serving cell A1 is invalid. Similarly, it is assumed that the downlink resource configured by the network device for the terminal device includes the serving cell A2 of the terminal device. Because the channel occupancy information corresponding to the serving cell A2 in the first indication information is the channel occupancy time, the terminal device may perform downlink measurement on the serving cell A2, and/or receive the downlink data from the serving cell A2 within the channel occupancy time corresponding to the cell identity A2.

In this embodiment of this application, the network device performs omnidirectional-based LBT to obtain the LBT result, and sends the first indication information to the terminal device. When the first indication information indicates the channel occupancy time of the network device, if the cell identity included in the first indication information is the identifier of the serving cell in the downlink resource configured by the network device for the terminal device, within the channel occupancy time included in the first indication information, the terminal device receives the downlink data from the serving cell identified by the cell identity or performs downlink measurement on the serving cell identified by the cell identity. When the first indication information indicates the channel occupancy time of the network device, if the cell identity included in the first indication information is the identifier of the serving cell in the downlink resource configured by the network device for the terminal device, within the channel unoccupied time included in the first indication information, the terminal device skips receiving the downlink data from the serving cell identified by the cell identity, skips sending the HARQ feedback corresponding to the downlink data, skips performing downlink measurement on the serving cell identified by the cell identity, or determines that the downlink measurement result of the serving cell identified by the cell identity is invalid. In this embodiment of this application, when not preempting a channel of the serving cell included in the downlink resource configured for the terminal device, a network side skips receiving the downlink data from the serving cell, skips sending the HARQ feedback corresponding to the downlink data, skips performing downlink measurement on the serving cell, or determines that the downlink measurement result of the serving cell is invalid. Therefore, unnecessary measurement is reduced, and power consumption of the terminal device is reduced.

The communication method in embodiments of this application is described in detail above. To better implement the foregoing solutions in embodiments of this application, embodiments of this application further provide a corresponding apparatus or device.

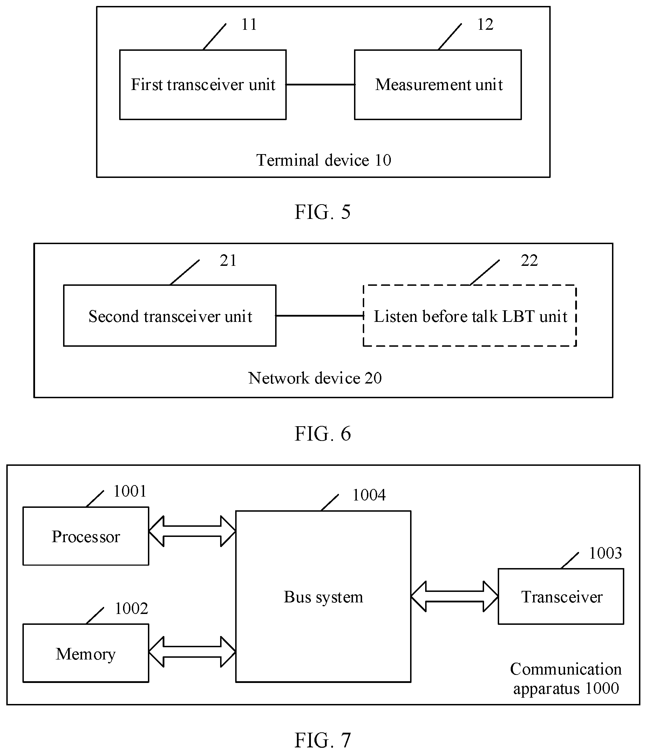

FIG. 5 is a schematic diagram of a structure of a terminal device according to an embodiment of this application. As shown in FIG. 5, the terminal device 10 may include:
a first transceiver unit 11, configured to receive first indication information from a network device, where the first indication information indicates channel occupancy information of the network device; and a measurement unit 12, configured to: when the first indication information received by the first transceiver unit 11 indicates a channel occupancy time of the network device, perform downlink measurement within the channel occupancy time; and/or a first transceiver unit 11, further configured to: when first indication information indicates a channel occupancy time of a network device, receive downlink data within the channel occupancy time, and a measurement unit 12, further configured to: when the first indication information received by the first transceiver unit 11 indicates a channel unoccupied time of the network device, within the channel unoccupied time, skip performing downlink measurement or determine that a downlink measurement result is invalid; and/or a first transceiver unit 11, further configured to: when first indication information indicates a channel unoccupied time of a network device, skip receiving downlink data, or skip sending a HARQ feedback corresponding to the downlink data. The channel occupancy information includes the channel occupancy time or the channel unoccupied time.

In some feasible implementations, the first indication information includes at least one beam identity and channel occupancy information corresponding to each of the at least one beam identity. Alternatively, the first indication information includes a cell identity and the channel occupancy information.

In some feasible implementations, the first indication information includes the at least one beam identity and a channel occupancy time corresponding to each of the at least one beam identity. The measurement unit 12 is specifically configured to: when the first indication information received by the first transceiver unit 11 indicates the channel occupancy time of the network device, and when the beam identity included in the first indication information includes a beam identity of a first beam included in a downlink resource configured by the network device for the terminal device, perform downlink measurement on the first beam within a channel occupancy time of the first beam; and/or the first transceiver unit 11 is specifically configured to: when the first indication information indicates the channel occupancy time of the network device, and when the beam identity included in the first indication information includes the beam identity of the first beam included in the downlink resource configured by the network device for the terminal device, receive the downlink data from the first beam within the channel occupancy time of the first beam. The at least one beam identity includes the beam identity of the first beam.

In some feasible implementations, the first indication information includes the at least one beam identity and a channel unoccupied time corresponding to each of the at least one beam identity. The measurement unit 12 is further specifically configured to: when the first indication information received by the first transceiver unit 11 indicates the channel unoccupied time of the network device, and when the beam identity included in the first indication information includes the beam identity of the first beam included in the downlink resource configured by the network device for the terminal device, within a channel unoccupied time of the first beam, skip performing downlink measurement on the first beam, or determine that a downlink measurement result of the first beam is invalid; and/or the first transceiver unit 11 is further specifically configured to: when the first indication information indicates the channel unoccupied time of the network device, and when the beam identity included in the first indication information includes the beam identity of the first beam included in the downlink resource configured by the network device for the terminal device, skip receiving the downlink data from the first beam or skip sending the HARQ feedback corresponding to the downlink data within the channel unoccupied time of the first beam.

In some feasible implementations, the first indication information further includes an identifier of a TRP to which each beam identified by the at least one beam identity belongs and/or an identifier of a serving cell covered by the beam.

In some feasible implementations, the first indication information includes the cell identity and the channel occupancy time. The measurement unit 12 is specifically configured to: when the first indication information received by the first transceiver unit 11 indicates the channel occupancy time of the network device, and when the beam identity included in the first indication information includes the beam identity of the first beam included in the downlink resource configured by the network device for the terminal device, within the channel occupancy time, perform downlink measurement on a serving cell identified by the cell identity; and/or the first transceiver unit 11 is specifically configured to: when the first indication information indicates the channel occupancy time of the network device, and when the beam identity included in the first indication information includes the beam identity of the first beam included in the downlink resource configured by the network device for the terminal device, within the channel occupancy time, receive the downlink data from the serving cell identified by the cell identity.

In some feasible implementations, the first indication information includes the cell identity and the channel occupancy time. The measurement unit 12 is further specifically configured to: when the first indication information received by the first transceiver unit 11 indicates the channel unoccupied time of the network device, and when the beam identity included in the first indication information includes the beam identity of the first beam included in the downlink resource configured by the network device for the terminal device, within the channel unoccupied time, skip performing downlink measurement on the serving cell identified by the cell identity, or determine that a downlink measurement result of the serving cell is invalid; and/or the first transceiver unit 11 is further specifically configured to: when the first indication information indicates the channel unoccupied time of the network device, and when the beam identity included in the first indication information includes the beam identity of the first beam included in the downlink resource configured by the network device for the terminal device, within the channel unoccupied time, skip receiving the downlink data from the serving cell identified by the cell identity or skip sending the HARQ feedback corresponding to the downlink data.

In some feasible implementations, the first indication information is carried on a group common physical downlink control channel GC-PDCCH.

In some feasible implementations, downlink measurement includes downlink signal measurement and/or downlink channel measurement. Downlink signal measurement includes one or more of the following: channel state information CSI measurement, beam reference signal received power RSRP measurement, or beam failure detection. Downlink channel measurement includes physical downlink control channel PDCCH detection.

The measurement unit 12 may be a processing unit.

During specific implementation, for implementation of each module or unit, correspondingly refer to corresponding descriptions of the terminal device in the embodiment shown in FIG. 2 or FIG. 4, to perform the method and the function performed by the terminal device in the foregoing embodiment.

In this embodiment of this application, only when a network side preempts a channel and the network side configures the corresponding downlink resource for the terminal device 10, the terminal device 10 performs downlink measurement and/or receives the downlink data within the channel occupancy time indicated by the first indication information. When the network side does not preempt the channel, even if the network side configures the corresponding downlink resource for the terminal device 10, within the channel unoccupied time indicated by the first indication information, the terminal device 10 does not need to perform downlink measurement, does not receive the downlink data, does not send the HARQ feedback corresponding to the downlink data, or determines that the downlink measurement result is invalid. Therefore, unnecessary measurement is reduced, a downlink measurement failure caused because the network side does not preempt the channel is excluded, and measurement efficiency and accuracy of a measurement result are improved.

FIG. 6 is a schematic diagram of a structure of a network device according to an embodiment of this application. As shown in FIG. 6, the network device 20 may include:
a second transceiver unit 21, configured to send first indication information to a terminal device. The first indication information indicates channel occupancy information of the network device. The channel occupancy information includes a channel occupancy time or a channel unoccupied time. When the first indication information indicates the channel occupancy time of the network device, the first indication information indicates the terminal device to perform downlink measurement and/or receive downlink data within the channel occupancy time. When the first indication information indicates the channel unoccupied time of the network device, the first indication information indicates, within the channel unoccupied time, the terminal device to skip performing downlink measurement, skip receiving the downlink data, skip sending a HARQ feedback corresponding to the downlink data, or determine that a downlink measurement result is invalid.

In some feasible implementations, the network device 20 further includes a listen before talk LBT unit 22. The LBT unit 22 is configured to perform beam-based LBT or is configured to perform omnidirectional-based LBT, to obtain an LBT result.

In some feasible implementations, the first indication information includes at least one beam identity and channel occupancy information corresponding to each of the at least one beam identity. Alternatively, the first indication information includes a cell identity and the channel occupancy information.

In some feasible implementations, the first indication information includes the at least one beam identity and a channel occupancy time corresponding to each of the at least one beam identity. When the first indication information indicates the channel occupancy time of the network device, the first indication information specifically indicates, when the beam identity included in the first indication information includes a beam identity of a first beam included in a downlink resource configured by the network device for the terminal device, the terminal device to perform downlink measurement on the first beam, and/or receive the downlink data from the first beam within a channel occupancy time of the first beam. The at least one beam identity includes the beam identity of the first beam.

In some feasible implementations, the first indication information includes the at least one beam identity and a channel unoccupied time corresponding to each of the at least one beam identity. When the first indication information indicates the channel unoccupied time of the network device, the first indication information further specifically indicates, when the beam identity included in the first indication information includes the beam identity of the first beam included in the downlink resource configured by the network device for the terminal device, within a channel unoccupied time of the first beam, the terminal device to skip performing downlink measurement on the first beam, skip receiving the downlink data from the first beam, skip sending the HARQ feedback corresponding to the downlink data, or determine that a downlink measurement result of the first beam is invalid.

In some feasible implementations, the first indication information may further include an identifier of a TRP to which each beam identified by the at least one beam identity belongs and/or an identifier of a serving cell covered by the beam.

In some feasible implementations, the first indication information includes the cell identity and the channel occupancy time. When the first indication information indicates the channel occupancy time of the network device, the first indication information specifically indicates, when the cell identity included in the first indication information is an identifier of a serving cell included in the downlink resource configured by the network device for the terminal device, within the channel occupancy time, the terminal device to receive the downlink data from the serving cell identified by the cell identity or perform downlink measurement on the serving cell.

In some feasible implementations, the first indication information includes the cell identity and the channel unoccupied time. When the first indication information indicates the channel unoccupied time of the network device, the first indication information further specifically indicates, when the cell identity included in the first indication information is the identifier of the serving cell included in the downlink resource configured by the network device for the terminal device, within the channel unoccupied time, the terminal device to skip receiving the downlink data from the serving cell identified by the cell identity, skip sending the HARQ feedback corresponding to the downlink data, skip performing downlink measurement on the serving cell, or determine that a downlink measurement result of the serving cell is invalid.

In some feasible implementations, the first indication information may be carried on a GC-PDCCH.

In some feasible implementations, downlink measurement may include downlink signal measurement and/or downlink channel measurement. Downlink signal measurement may include one or more of the following: CSI measurement, beam RSRP measurement, or beam failure detection. Downlink channel measurement includes PDCCH detection.

The LBT unit 22 may be a processing unit.

During specific implementation, for implementation of each module or unit, correspondingly, refer to corresponding descriptions of the network device in the embodiment shown in FIG. 2 or FIG. 4, to perform the method and the function performed by the network device in the foregoing embodiment.

FIG. 7 is a schematic diagram of a structure of a communication apparatus according to an embodiment of this application. As shown in FIG. 7, the communication apparatus 1000 provided in this embodiment of this application includes a processor 1001, a memory 1002, a transceiver 1003, and a bus system 1004. The communication apparatus provided in this embodiment of this application may be a terminal device or a network device.

The processor 1001, the memory 1002, and the transceiver 1003 are connected by using the bus system 1004.

The memory 1002 is configured to store a program. Specifically, the program may include program code, and the program code includes computer operation instructions. The memory 1002 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). Only one memory is shown in FIG. 7. Certainly, a plurality of memories may be disposed as needed. The memory 1002 may alternatively be a memory in the processor 1001. This is not limited herein.

The memory 1002 stores the following elements, executable units or data structures, or subsets or extended sets thereof:
operation instructions: including various operation instructions, used for implementing various operations; and
an operating system: including various system programs, used for implementing various basic services and processing a hardware-based task.

The processor 1001 controls an operation of the communication apparatus 1000. The processor 1001 may be one or more central processing units (central processing units, CPUs). When the processor 1001 is one CPU, the CPU may be a single-core CPU, or may be a multi-core CPU.

During specific application, components of the communication apparatus 1000 are coupled together by using the bus system 1004. In addition to a data bus, the bus system 1004 may further include a power bus, a control bus, a status signal bus, and the like. However, for clear descriptions, various buses in FIG. 7 are marked as the bus system 1004. For ease of representation, only illustrative depiction is provided in FIG. 7.

Either FIG. 2 or FIG. 4 provided in the foregoing embodiments of this application or the method of the terminal device disclosed in the foregoing embodiments; or either FIG. 2 or FIG. 4 provided in the foregoing embodiments of this application or the method of the network device in the foregoing embodiments may be applied to the processor 1001, or may be implemented by the processor 1001. The processor 1001 may be an integrated circuit chip and has a signal processing capability. In an implementation process, each step in the foregoing method may be completed by using an integrated logic circuit of hardware in the processor 1001 or instructions in a form of software. The foregoing processor 1001 may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1002. The processor 1001 reads information in the memory 1002, and performs, in combination with hardware of the processor 1001, the method steps of the terminal device described in either FIG. 2 or FIG. 4, or performs, in combination with hardware of the processor 1001, the method steps of the network device described in either FIG. 2 or FIG. 4.

An embodiment of this application further provides a computer program product. The computer program product includes computer program code. When the computer program code is run on a computer, the computer is enabled to perform the method steps of the terminal device described in FIG. 2 or FIG. 4. Alternatively, when the computer program code is run on a computer, the computer is enabled to perform the method steps of the network device described in FIG. 2 or FIG. 4.

An embodiment of this application further provides an apparatus. The apparatus may be a chip. The chip includes a processor. The processor is configured to read and execute a computer program stored in a memory, to perform the communication method according to any one of the possible implementations of FIG. 2 or FIG. 4. Optionally, the chip further includes the memory, and the memory is connected to the processor by using a circuit or a wire. Further, optionally, the chip includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

Optionally, the processor and the memory may be physically independent units, or the memory may be integrated with the processor.

In another embodiment of this application, a communication system is further provided. The communication system includes a terminal device and a network device. For example, the terminal device may be the terminal device in the embodiment shown in FIG. 2 or FIG. 4, and the network device may be the network device in the embodiment shown in FIG. 2 or FIG. 4.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving (S202), by a terminal device, first indication information from a network device, wherein the first indication information indicates channel occupancy information of the network device, and the channel occupancy information comprises a channel occupancy time or a channel unoccupied time, wherein the channel unoccupied time is a backoff time of the network device on a beam of a channel;
when the first indication information indicates the channel occupancy time of the network device, performing (S203), by the terminal device, downlink measurement and/or receiving downlink data within the channel occupancy time; and
when the first indication information indicates the channel unoccupied time of the network device, within the channel unoccupied time, skipping performing (S204), by the terminal device, downlink measurement, skipping receiving the downlink data, skipping sending a hybrid automatic repeat request HARQ feedback corresponding to the downlink data, or determining that a downlink measurement result is invalid.

2. The method according to claim 1, wherein the first indication information comprises at least one beam identity and channel occupancy information corresponding to each of the at least one beam identity; or the first indication information comprises a cell identity and the channel occupancy information.

3. The method according to claim 2, wherein the first indication information comprises the at least one beam identity and a channel occupancy time corresponding to each of the at least one beam identity; and
the performing, by the terminal device, downlink measurement and/or receiving downlink data within the channel occupancy time comprises:
performing, by the terminal device, downlink measurement on a first beam, and/or receiving the downlink data from the first beam within a channel occupancy time of the first beam, wherein the at least one beam identity comprises a beam identity of the first beam.

4. The method according to claim 2 or 3, wherein the first indication information further comprises an identifier of a transmission reception point TRP to which each beam identified by the at least one beam identity belongs and/or an identifier of a serving cell covered by the beam.

5. The method according to claim 2, wherein the first indication information comprises the cell identity and the channel occupancy time; and
the performing, by the terminal device, downlink measurement and/or receiving downlink data within the channel occupancy time comprises:
within the channel occupancy time, receiving, by the terminal device, the downlink data from a serving cell identified by the cell identity and/or performing downlink measurement on the serving cell identified by the cell identity.

6. The method according to any one of claims 1 to 5, wherein the first indication information is carried on a group common physical downlink control channel GC-PDCCH.

7. A communication method, comprising:
sending (S202), by a network device, first indication information to a terminal device, wherein the first indication information indicates channel occupancy information of the network device, and the channel occupancy information comprises a channel occupancy time or a channel unoccupied time, wherein the channel unoccupied time is a backoff time of the network device on a beam of a channel; when the first indication information indicates the channel occupancy time of the network device, the first indication information is used to indicate the terminal device to perform downlink measurement and/or receive downlink data within the channel occupancy time; and when the first indication information indicates the channel unoccupied time of the network device, the first indication information is used to indicate, within the channel unoccupied time, the terminal device to skip performing downlink measurement, skip receiving the downlink data, skip sending a HARQ feedback corresponding to the downlink data, or determine that a downlink measurement result is invalid.

8. The method according to claim 7, wherein the first indication information comprises at least one beam identity and channel occupancy information corresponding to each of the at least one beam identity; or the first indication information comprises a cell identity and the channel occupancy information.

9. The method according to claim 8, wherein the first indication information comprises the at least one beam identity and a channel occupancy time corresponding to each of the at least one beam identity; and
when the first indication information indicates the channel occupancy time of the network device, the first indication information is used to indicate the terminal device to perform downlink measurement on a first beam, and/or receive the downlink data from the first beam within a channel occupancy time of the first beam, wherein the at least one beam identity comprises a beam identity of the first beam.

10. The method according to claim 8 or 9, wherein the first indication information further comprises an identifier of a TRP to which each beam identified by the at least one beam identity belongs and/or an identifier of a serving cell covered by the beam.

11. The method according to claim 8, wherein the first indication information comprises the cell identity and the channel occupancy time; and
when the first indication information indicates the channel occupancy time of the network device, the first indication information is used to indicate, within the channel occupancy time, the terminal device to receive the downlink data from a serving cell identified by the cell identity and/or perform downlink measurement on the serving cell identified by the cell identity.

12. The method according to any one of claims 7 to 11, wherein the first indication information is carried on a GC-PDCCH.

13. A computer-readable storage medium, wherein the computer-readable storage medium stores computer program instructions; and when the computer program instructions are run on a computer, the computer is enabled to perform the method according to any one of claims 1 to 6 or any one of claims 7 to12.

14. A computer program product comprising instructions, wherein when the instructions run on a computer, the computer is enabled to perform the method according to any one of claims 1 to 6 or any one of claims 7 to 12.

15. An apparatus comprising means configured to perform the method according to any one of claims 1 to 6 or any one of claims 7 to 12.

## Patentansprüche

1. Kommunikationsverfahren, umfassend:
Empfangen (S202), durch ein Endgerät, erster Anzeigeinformationen von einem Netzwerkgerät, wobei die ersten Anzeigeinformationen Kanalbelegungsinformationen des Netzwerkgeräts anzeigen und die Kanalbelegungsinformationen eine Kanalbelegungszeit oder eine Zeit, in welcher der Kanal nicht belegt ist, umfassen, wobei die Zeit, in welcher der Kanal nicht belegt ist, eine Backoff-Zeit des Netzwerkgeräts auf einem Strahl eines Kanals ist;
wenn die ersten Anzeigeinformationen die Kanalbelegungszeit des Netzwerkgeräts anzeigen, Durchführen (S203), durch das Endgerät, einer Downlink-Messung und/oder Empfangen von Downlink-Daten innerhalb der Kanalbelegungszeit; und
wenn die ersten Anzeigeinformationen die Zeit des Netzwerkgeräts anzeigen, in welcher der Kanal nicht belegt ist, innerhalb der Zeit, in welcher der Kanal nicht belegt ist, Überspringen (S204) des Durchführens, durch das Endgerät, einer Downlink-Messung, Überspringen des Empfangens der Downlink-Daten, Überspringen des Sendens einer hybriden automatischen Wiederholungsanforderungsrückmeldung, HARQ-Rückmeldung, die den Downlink-Daten entspricht, oder Bestimmen, dass ein Downlink-Messergebnis ungültig ist.

2. Verfahren nach Anspruch 1, wobei die ersten Anzeigeinformationen mindestens eine Strahlidentität und Kanalbelegungsinformationen umfassen, die jeder der mindestens einen Strahlidentität entsprechen; oder wobei die ersten Anzeigeinformationen eine Zellidentität und die Kanalbelegungsinformationen umfassen.

3. Verfahren nach Anspruch 2, wobei die ersten Anzeigeinformationen die mindestens eine Strahlidentität und eine Kanalbelegungszeit umfassen, die jeder der mindestens einen Strahlidentität entspricht; und
das Durchführen, durch das Endgerät, einer Downlink-Messung und/oder Empfangen von Downlink-Daten innerhalb der Kanalbelegungszeit Folgendes umfasst:
Durchführen, durch das Endgerät, einer Downlink-Messung an einem ersten Strahl und/oder Empfangen der Downlink-Daten von dem ersten Strahl innerhalb einer Kanalbelegungszeit des ersten Strahls, wobei die mindestens eine Strahlidentität eine Strahlidentität des ersten Strahls umfasst.

4. Verfahren nach Anspruch 2 oder 3, wobei die ersten Anzeigeinformationen ferner eine Kennung eines Übertragungsempfangspunkts, TRP, zu dem jeder Strahl, der durch die mindestens eine Strahlidentität identifiziert wird, gehört, und/oder eine Kennung einer bedienenden Zelle, die von dem Strahl abgedeckt wird, umfassen.

5. Verfahren nach Anspruch 2, wobei die ersten Anzeigeinformationen die Zellidentität und die Kanalbelegungszeit umfassen; und
das Durchführen, durch das Endgerät, einer Downlink-Messung und/oder Empfangen von Downlink-Daten innerhalb der Kanalbelegungszeit Folgendes umfasst:
innerhalb der Kanalbelegungszeit, Empfangen, durch das Endgerät, der Downlink-Daten von einer bedienenden Zelle, die durch die Zellidentität identifiziert wird, und/oder Durchführen einer Downlink-Messung an der bedienenden Zelle, die durch die Zellidentität identifiziert wird.

6. Verfahren nach einem der Ansprüche 1 bis 5, wobei die ersten Anzeigeinformationen auf einem durch die Gruppe gemeinsam genutzten physikalischen Downlink-Steuerungskanal, GC-PDCCH, getragen werden.

7. Kommunikationsverfahren, umfassend:
Senden (S202), durch ein Netzwerkgerät, erster Anzeigeinformationen an ein Endgerät, wobei die ersten Anzeigeinformationen Kanalbelegungsinformationen des Netzwerkgeräts anzeigen und die Kanalbelegungsinformationen eine Kanalbelegungszeit oder eine Zeit, in welcher der Kanal nicht belegt ist, umfassen, wobei die Zeit, in welcher der Kanal nicht belegt ist, eine Backoff-Zeit des Netzwerkgeräts auf einem Strahl eines Kanals ist; wenn die ersten Anzeigeinformationen die Kanalbelegungszeit des Netzwerkgeräts anzeigen, die ersten Anzeigeinformationen verwendet werden, um dem Endgerät anzuzeigen, innerhalb der Kanalbelegungszeit eine Downlink-Messung durchzuführen und/oder Downlink-Daten zu empfangen; und wenn die ersten Anzeigeinformationen die Zeit des Netzwerkgeräts anzeigen, in welcher der Kanal nicht belegt ist, die ersten Anzeigeinformationen verwendet werden, um dem Endgerät, innerhalb der Zeit, in welcher der Kanal nicht belegt ist, anzuzeigen, das Durchführen einer Downlink-Messung zu überspringen, das Empfangen der Downlink-Daten zu überspringen, das Senden einer HARQ-Rückmeldung, die den Downlink-Daten entspricht, zu überspringen oder zu bestimmen, dass ein Downlink-Messergebnis ungültig ist.

8. Verfahren nach Anspruch 7, wobei die ersten Anzeigeinformationen mindestens eine Strahlidentität und Kanalbelegungsinformationen umfassen, die jeder der mindestens einen Strahlidentität entsprechen; oder wobei die ersten Anzeigeinformationen eine Zellidentität und die Kanalbelegungsinformationen umfassen.

9. Verfahren nach Anspruch 8, wobei die ersten Anzeigeinformationen die mindestens eine Strahlidentität und eine Kanalbelegungszeit umfassen, die jeder der mindestens einen Strahlidentität entspricht; und
wenn die ersten Anzeigeinformationen die Kanalbelegungszeit des Netzwerkgeräts anzeigen, die ersten Anzeigeinformationen verwendet werden, um dem Endgerät anzuzeigen, eine Downlink-Messung an einem ersten Strahl durchzuführen und/oder die Downlink-Daten von dem ersten Strahl innerhalb einer Kanalbelegungszeit des ersten Strahls zu empfangen, wobei die mindestens eine Strahlidentität eine Strahlidentität des ersten Strahls umfasst.

10. Verfahren nach Anspruch 8 oder 9, wobei die ersten Anzeigeinformationen ferner eine Kennung eines TRP, zu dem jeder Strahl, der durch die mindestens eine Strahlidentität identifiziert wird, gehört, und/oder eine Kennung einer bedienenden Zelle, die von dem Strahl abgedeckt wird, umfassen.

11. Verfahren nach Anspruch 8, wobei die ersten Anzeigeinformationen die Zellidentität und die Kanalbelegungszeit umfassen; und
wenn die ersten Anzeigeinformationen die Kanalbelegungszeit des Netzwerkgeräts anzeigen, die ersten Anzeigeinformationen verwendet werden, um dem Endgerät innerhalb der Kanalbelegungszeit anzuzeigen, die Downlink-Daten von einer bedienenden Zelle, die durch die Zellidentität identifiziert wird, zu empfangen und/oder eine Downlink-Messung an der bedienenden Zelle, die durch die Zellidentität identifiziert wird, durchzuführen.

12. Verfahren nach einem der Ansprüche 7 bis 11, wobei die ersten Anzeigeinformationen auf einem GC-PDCCH getragen werden.

13. Computerlesbares Speichermedium, wobei das computerlesbare Speichermedium Computerprogrammanweisungen speichert; und, wenn die Computerprogrammanweisungen auf einem Computer ausgeführt werden, der Computer in die Lage versetzt wird, das Verfahren nach einem der Ansprüche 1 bis 6 oder nach einem der Ansprüche 7 bis 12 durchzuführen.

14. Computerprogrammprodukt, umfassend Anweisungen, wobei, wenn die Anweisungen auf einem Computer ausgeführt werden, der Computer in die Lage versetzt wird, das Verfahren nach einem der Ansprüche 1 bis 6 oder nach einem der Ansprüche 7 bis 12 durchzuführen.

15. Vorrichtung, die Mittel umfasst, die dazu konfiguriert sind, das Verfahren nach einem der Ansprüche 1 bis 6 oder nach einem der Ansprüche 7 bis 12 durchzuführen.

## Revendications

1. Procédé de communication, comprenant :
la réception (S202), par un dispositif terminal, de premières informations d'indication provenant d'un dispositif réseau, dans lequel les premières informations d'indication indiquent des informations d'occupation de canal du dispositif réseau, et les informations d'occupation de canal comprennent un temps d'occupation de canal ou un temps d'inoccupation de canal, dans lequel le temps d'inoccupation de canal est un temps de recul du dispositif réseau sur un faisceau d'un canal ;
lorsque les premières informations d'indication indiquent le temps d'occupation de canal du dispositif réseau, la réalisation (S203), par le dispositif terminal, d'une mesure de liaison descendante et/ou la réception de données de liaison descendante pendant le temps d'occupation de canal ; et
lorsque les premières informations d'indication indiquent le temps d'inoccupation de canal du dispositif réseau, pendant le temps d'inoccupation de canal, l'omission de la réalisation (S204), par le dispositif terminal, d'une mesure de liaison descendante, l'omission de la réception des données de liaison descendante, l'omission de l'envoi d'une demande de répétition automatique hybride HARQ correspondant aux données de liaison descendante, ou la détermination qu'un résultat de mesure de liaison descendante est invalide.

2. Procédé selon la revendication 1, dans lequel les premières informations d'indication comprennent au moins une identité de faisceau et des informations d'occupation de canal correspondant à chacune de l'au moins une identité de faisceau ; ou les premières informations d'indication comprennent une identité de cellule et les informations d'occupation de canal.

3. Procédé selon la revendication 2, dans lequel les premières informations d'indication comprennent l'au moins une identité de faisceau et un temps d'occupation de canal correspondant à chacune de l'au moins une identité de faisceau ; et
la réalisation, par le dispositif terminal, d'une mesure de liaison descendante et/ou la réception de données de liaison descendante pendant le temps d'occupation de canal comprend :
la réalisation, par le dispositif terminal, d'une mesure de liaison descendante sur un premier faisceau, et/ou la réception des données de liaison descendante provenant du premier faisceau pendant un temps d'occupation de canal du premier faisceau, dans lequel l'au moins une identité de faisceau comprend une identité de faisceau du premier faisceau.

4. Procédé selon la revendication 2 ou 3, dans lequel les premières informations d'indication comprennent également un identifiant d'un point d'émission-réception TRP auquel appartient chaque faisceau identifié par l'au moins une identité de faisceau et/ou un identifiant d'une cellule de desserte couverte par le faisceau.

5. Procédé selon la revendication 2, dans lequel les premières informations d'indication comprennent l'identité de cellule et le temps d'occupation de canal ; et
la réalisation, par le dispositif terminal, d'une mesure de liaison descendante et/ou la réception de données de liaison descendante pendant le temps d'occupation de canal comprend :
pendant le temps d'occupation de canal, la réception, par le dispositif terminal, des données de liaison descendante provenant d'une cellule de desserte identifiée par l'identité de cellule et/ou la réalisation d'une mesure de liaison descendante sur la cellule de desserte identifiée par l'identité de cellule.

6. Procédé selon l'une quelconque des revendications 1 à 5, dans lequel les premières informations d'indication sont portées sur un canal de commande de liaison descendante physique commun de groupe, GC-PDCCH.

7. Procédé de communication, comprenant :
l'envoi (S202), par un dispositif réseau, de premières informations d'indication à un dispositif terminal, dans lequel les premières informations d'indication indiquent des informations d'occupation de canal du dispositif réseau, et les informations d'occupation de canal comprennent un temps d'occupation de canal ou un temps d'inoccupation de canal, dans lequel le temps d'inoccupation de canal est un temps de recul du dispositif réseau sur un faisceau d'un canal ; lorsque les premières informations d'indication indiquent le temps d'occupation de canal du dispositif réseau, les premières informations d'indication sont utilisées pour indiquer au dispositif terminal de réaliser une mesure de liaison descendante et/ou de recevoir des données de liaison descendante pendant le temps d'occupation de canal ; et lorsque les premières informations d'indication indiquent le temps d'inoccupation de canal du dispositif réseau, les premières informations d'indication sont utilisées pour indiquer, pendant le temps d'inoccupation de canal, au dispositif terminal d'omettre la réalisation d'une mesure de liaison descendante, d'omettre la réception des données de liaison descendante, d'omettre l'envoi d'une rétroaction HARQ correspondant aux données de liaison descendante, ou de déterminer qu'un résultat de mesure de liaison descendante est invalide.

8. Procédé selon la revendication 7, dans lequel les premières informations d'indication comprennent au moins une identité de faisceau et des informations d'occupation de canal correspondant à chacune de l'au moins une identité de faisceau ; ou les premières informations d'indication comprennent une identité de cellule et les informations d'occupation de canal.

9. Procédé selon la revendication 8, dans lequel les premières informations d'indication comprennent l'au moins une identité de faisceau et un temps d'occupation de canal correspondant à chacune de l'au moins une identité de faisceau ; et
lorsque les premières informations d'indication indiquent le temps d'occupation de canal du dispositif réseau, les premières informations d'indication sont utilisées pour indiquer au dispositif terminal D de réaliser une mesure de liaison descendante sur un premier faisceau, et/ou de recevoir les données de liaison descendante provenant du premier faisceau pendant un temps d'occupation de canal du premier faisceau, dans lequel l'au moins une identité de faisceau comprend une identité de faisceau du premier faisceau.

10. Procédé selon la revendication 8 ou 9, dans lequel les premières informations d'indication comprennent également un identifiant d'un TRP auquel appartient chaque faisceau identifié par l'au moins une identité de faisceau et/ou un identifiant d'une cellule de desserte couverte par le faisceau.

11. Procédé selon la revendication 8, dans lequel les premières informations d'indication comprennent l'identité de cellule et le temps d'occupation de canal ; et
lorsque les premières informations d'indication indiquent le temps d'occupation de canal du dispositif réseau, les premières informations d'indication sont utilisées pour indiquer, pendant le temps d'occupation de canal, au dispositif terminal de recevoir les données de liaison descendante provenant d'une cellule de desserte identifiée par l'identité de cellule et/ou de réaliser une mesure de liaison descendante sur la cellule de desserte identifiée par l'identité de cellule.

12. Procédé selon l'une quelconque des revendications 7 à 11, dans lequel les premières informations d'indication sont portées sur un GC-PDCCH.

13. Support d'enregistrement lisible par ordinateur, dans lequel le support d'enregistrement lisible par ordinateur stocke des instructions de programme informatique ; et lorsque les instructions de programme informatique sont exécutées sur un ordinateur, l'ordinateur est activé pour réaliser le procédé selon l'une quelconque des revendications 1 à 6 ou l'une quelconque des revendications 7 à 12.

14. Produit de programme informatique comprenant des instructions, dans lequel lorsque les instructions sont exécutées sur un ordinateur, l'ordinateur est activé pour réaliser le procédé selon l'une quelconque des revendications 1 à 6 ou l'une quelconque des revendications 7 à 12.

15. Appareil comprenant un moyen configuré pour réaliser le procédé selon l'une quelconque des revendications 1 à 6 ou l'une quelconque des revendications 7 à **12.**
